**Europäisches Patentamt**

**European Patent Office**

**Office européen des brevets**

(19)

(11) **EP 1 443 314 A2**

(12) **EUROPÄISCHE PATENTANMELDUNG**

(43) Veröffentlichungstag:
   **04.08.2004 Patentblatt 2004/32**

(51) Int Cl.$^7$: **G01F 5/00**

(21) Anmeldenummer: **03023817.4**

(22) Anmeldetag: **20.10.2003**

(84) Benannte Vertragsstaaten:
   **AT BE BG CH CY CZ DE DK EE ES FI FR GB GR HU IE IT LI LU MC NL PT RO SE SI SK TR**
   Benannte Erstreckungsstaaten:
   **AL LT LV MK**

(30) Priorität: **23.12.2002 CH 200202205**

(71) Anmelder: **Sensirion AG**
   **8052 Zürich (CH)**

(72) Erfinder:
   • **Hornung, Mark**
     **8049 Zürich (CH)**

   • **Kubasch, Jens**
     **8046 Zürich (CH)**
   • **Lechner, Moritz**
     **8057 Zürich (CH)**
   • **Mayer, Felix**
     **8057 Zürich (CH)**

(74) Vertreter: **Blum, Rudolf Emil Ernst et al**
   **c/o E. Blum & Co**
   **Patentanwälte**
   **Vorderberg 11**
   **8044 Zürich (CH)**

(54) **Vorrichtung zur Messung des Flusses eines Gases oder einer Flüssigkeit in einem Nebenkanal**

(57) Die Vorrichtung zur Messung des Flusses eines Fluids besitzt einen Hauptkanal (1) und einen zum Hauptkanal (1) parallel geschalteten Nebenkanal (2). Der Nebenkanal besteht aus einem ersten Abschnitt (2a) mit einer Blende (3) und einen zweiten Abschnitt (2b) mit zwei parallelen Unterkanälen (4a, 4b). Im ersten Abschnitt (2a) dominieren turbulente Strömungseffekte, während im zweiten Abschnitt (2b) laminare Strömungsverhältnisse herrschen. Durch ausreichend starke turbulente Effekte im Nebenkanal (3) kann erreicht werden, dass das Teilungsverhältnis der Flüsse in Haupt- und Nebenkanal nahezu unabhängig von den Fluideigenschaften und unabhängig von der Durchflussmenge wird. Dank der Verwendung zweier paralleler Unterkanäle können im zweiten Abschnitt hohe Flussraten und somit starke turbulente Effekte erzielt werden, ohne dass der Messbereich des Sensors überschritten wird.

Fig. 2

Printed by Jouve, 75001 PARIS (FR)

**Beschreibung**

Die Erfindung betrifft eine Vorrichtung zur Messung des Flusses eines Fluids, d.h. eines Gases oder einer Flüssigkeit, und einen Nebenkanal für eine derartige Vorrichtung gemäss Oberbegriff der unabhängigen Ansprüche.

Eine Vorrichtung dieser Art ist in DE 101 29 300 offenbart. Sie besitzt einen Hauptkanal und einen Nebenkanal ("Bypass"). Im Nebenkanal ist ein Flusssensor angeordnet. Ein Vorteil einer derartigen Anordnung liegt darin, dass die zu messende Flussmenge im Nebenkanal geringer ist als im Hauptkanal, so dass auch hohe Flussmengen noch gemessen werden können.

Es zeigt sich, dass bei Sensoren dieser Art zwar der Messbereich erweitert wird, dass jedoch die Umrechnung des gemessenen Flusses im Nebenkanal auf den tatsächlichen Fluss im Hauptkanal zu systematischen Fehlern führen kann.

Es stellt sich deshalb die Aufgabe, eine Vorrichtung der eingangs genannten Art bereitzustellen, bei welcher die Messfehler klein sind.

Diese Aufgabe wird von der Vorrichtung gemäss den unabhängigen Ansprüchen erfüllt.

Wie die unten stehende Analyse zeigt, ist es zur Vermeidung systematischer Fehler von Vorteil, wenn der Nebenkanal so beschaffen ist, dass das Teilungsverhältnis der Strömungen möglichst oder weitgehend konstant ist. Dies kann z.B. erreicht werden, indem in einem Abschnitt des Nebenkanals mindestens eine sprunghafte Querschnittveränderung stattfindet, z.B. durch mindestens eine Blende. Um vergleichsweise starke turbulente Beiträge zum Strömungswiderstand zu erzeugen, kann der Durchmesser des die Turbulenz erzeugenden Bereichs sehr klein gewählt werden. Dies hat jedoch herstellungstechnische Schwierigkeiten und Probleme im Betrieb (Verschmutzung) zur Folge.

Somit ist der Durchmesser des die Turbulenz erzeugenden Bereichs nach unten limitiert, was wiederum mit sich bringt, dass die Flussrate im Nebenkanal nicht zu klein gewählt werden sollte, so dass immer noch ausreichend Turbulenzen entstehen. Dies führt jedoch wiederum zu höheren Strömungsgeschwindigkeiten im Bereich des Flusssensors, was nicht erwünscht ist. Dem wird erfindungsgemäss dadurch begegnet, dass ein erster Abschnitt des Nebenkanals so ausgestaltet ist, dass er eine deutliche Abhängigkeit des Strömungswiderstands bzw. des Druckabfalls $\Delta p1$ vom Quadrat der Flussrate vb zeigt. In einem zweiten Abschnitt des Nebenkanals sind mindestens zwei parallele Unterkanäle vorgesehen sind, welche in Serie zum ersten Abschnitt angeordnet sind, wobei der Flusssensor den Fluss in einem der Unterkanäle misst.

Indem das Fluid im zweiten Abschnitt in zwei oder mehr Unterkanäle aufgeteilt wird, kann die Flussrate bzw. Flussgeschwindigkeit (durch geeignete Wahl der Querschnittverhältnisse der Nebenkanäle) relativ tief sein, und dennoch können im Bereich des ersten Abschnitts des Nebenkanals starke Turbulenzen erzeugt werden, da dort die Summe der Ströme aller Unterkanäle auf die Struktur geführt wird, die eine Turbulenz erzeugt.

Dank der Verwendung von zwei oder mehr Unterkanälen stehen dem Systementwickler also zusätzliche Designparameter zur Verfügung, die es erlauben, die Strömungsverhältnisse am Flusssensor dem jeweils gewünschten Messbereich anzupassen.

Die Aufteilung in Unterkanäle hat zudem den Vorteil, dass die Querschnittfläche im Bereich desjenigen Unterkanals, an bzw. in welchem der Flusssensor angeordnet ist, relativ klein gewählt werden kann, was zu besserer Laminarität der Strömung im Sensorbereich und somit zu genaueren Messungen führt.

Die beschriebene Vorrichtung kann für die Messung von Flüssigkeiten oder Gasen eingesetzt werden.

Weitere bevorzugte Ausführungen und Anwendungen der Erfindung ergeben sich aus den abhängigen Ansprüchen und aus der nun folgenden Beschreibung anhand der Figuren. Dabei zeigen:

Fig. 1 eine schematische Darstellung einer Vorrichtung mit Hauptkanal und Nebenkanal,
Fig. 2 eine schematische Darstellung einer Vorrichtung, bei welcher im Nebenkanal zwei Unterkanäle vorgesehen sind,
Fig. 3 einen Gehäuseteil für einen Nebenkanal und
Fig. 4 einen Schnitt durch den Nebenkanal entlang Linie IV-IV von Fig. 3.

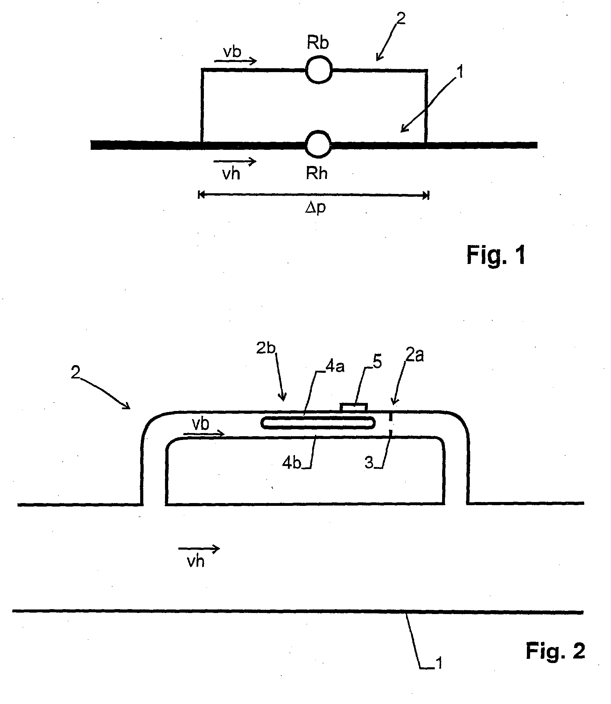

Bevor ein detailliertes Ausführungsbeispiel beschrieben wird, werden die Strömungsverhältnisse in Vorrichtungen mit Haupt- und Nebenkanal zunächst aus theoretischer Sicht beleuchtet. Hierzu wird auf Fig. 1 verwiesen, die einen Hauptkanal 1 und einen zu einem Abschnitt des Hauptkanals parallelen Nebenkanal 2 zeigt. In der Vorrichtung fliesst ein Fluid, d.h. eine Flüssigkeit oder ein Gas, wobei die Flussrate (d.h. die über den Querschnitt integrierte Flussgeschwindigkeit) im Hauptkanal mit vh und im Nebenkanal mit vb bezeichnet wird. Der Hauptkanal setzt dem Fluss einen (nichtlinearen) Flusswiderstand Rh entgegen, der Nebenkanal einen (ebenfalls nichtlinearen) Flusswiderstand Rb. Der Druckabfall über Haupt- und Nebenkanal beträgt $\Delta p$. Es gilt

$$\Delta p = \eta \cdot Kh1 \cdot vh + \rho \cdot Kh2 \cdot vh^2 \qquad (1)$$

und

$$\Delta p = \eta \cdot Kb1 \cdot vb + \rho \cdot Kb2 \cdot vb^2 \qquad (2)$$

wobei $\eta$ und $\rho$ die Viskosität und die Dichte des Fluids bezeichnen, Kh1 und Kh2 die linearen und quadratischen Anteile des Flusswiderstands im Hauptkanal und Kb1 und Kb2 die linearen und quadratischen Anteile des Flusswiderstands im Nebenkanal.

Vorzugsweise werden die Grössen Kh1, Kh2, Kb1 und Kb2 ungefähr wie folgt gewählt:

$$Kb1 = n \cdot Kh1 \text{ und } Kb2 = n^2 \cdot Kh2 \qquad (3)$$

mit einer Konstante n > 1, vorzugsweise n » 1. Bevorzugt ist die Wahl gemäss Gleichung (3) deshalb, weil in diesem Fall (wie einfach gezeigt werden kann) folgt, dass das Verhältnis der Flussraten im Haupt- und Nebenkanal über den ganzen Strömungsbereich konstant ist mit

$$vb = vh/n, \qquad (4)$$

unabhängig von den Materialparametern $\eta$ und $\rho$ (d.h. unabhängig von der Gaszusammensetzung).

Aus Gleichung (3) folgt, dass der durch Kb2 charakterisierte turbulente Anteil des Strömungswiderstands im Nebenkanal verglichen mit dem entsprechenden linearen Anteil (charakterisiert durch Kb1) sehr hoch sein muss, wesentlich höher als im Hauptkanal.

Soll der Fluss im Nebenkanal 2 gemessen werden, so muss ein entsprechender Flusssensor in einem Bereich mit geringen Turbulenzen angeordnet werden, da im Bereich turbulenter Strömungen Flussmessungen schwierig sind. Vorzugsweise wird deshalb im Nebenkanal ein erster Abschnitt vorgesehen, in welchem starke Turbulenzen stattfinden, sowie ein zweiter Abschnitt, in welchem die Strömung möglichst laminar verläuft, wobei der erste Abschnitt den Koeffizienten Kb2 prägt.

Mit anderen Worten gilt für den Druckabfall über dem ersten Abschnitt

$$\Delta p1 = c1 \cdot vb + c2 \cdot vb^2 \text{ mit } c2 \neq 0, \qquad (5)$$

wobei die Konstanten c1 und c2 den linearen und quadratischen Strömungswiderstand des ersten Teils 2a beschreiben. In der Regel gilt ungefähr

$$c2 \approx \rho \cdot Kb2. \qquad (6)$$

Der zweite Bereich, in welchem vorzugsweise die eigentliche Messung stattfindet, liefert einen möglichst geringen linearen Strömungswiderstand (Koeffizient Kbl). Allerdings sollte der zweite Abschnitt nicht einfach aus einem Rohr mit grossem Durchmesser bestehen, da ansonsten die Strömungsgeschwindigkeit beim Sensor zu gering und dessen Messbereich somit nicht ausgeschöpft wäre.

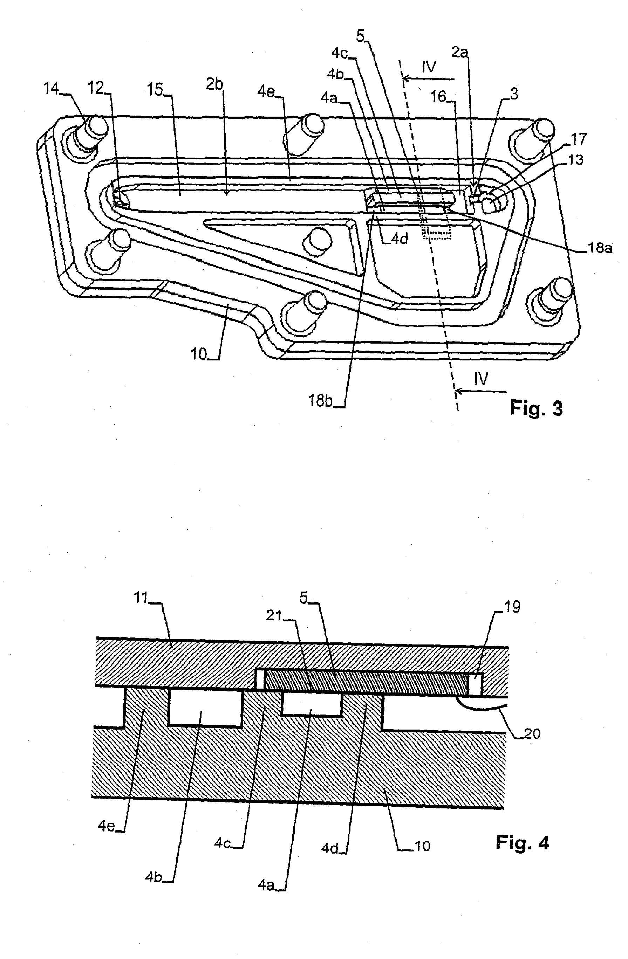

Deshalb wird eine Lösung gewählt, wie sie schematisch in Fig. 2 dargestellt ist. Bei dieser Lösung ist im ersten Abschnitt 2a eine Blende 3 angeordnet, während im zweiten Abschnitt 2b zwei Unterkanäle 4a, 4b vorgesehen sind. Die Unterkanäle 4a, 4b sind parallel zueinander und in Serie zur Blende 3 angeordnet. An einem der Unterkanäle ist der eigentliche Flusssensor 5 angeordnet.

Diese Anordnung hat den Vorteil, dass durch die Wahl der Querschnitte der beiden Unterkanäle 4a, 4b der Fluss durch den Nebenkanal 2 so in die Unterkanäle aufgeteilt werden kann, dass der Messbereich des Sensors voll ausgeschöpft wird. Dank der Verwendung mehrerer Unterkanäle kann der lineare Flusswiderstand im Nebenkanal (Koeffizient Kb1) relativ klein gehalten werden, so dass der quadratische Anteil (Koeffizient Kb2) nicht allzu gross zu sein braucht.

Als Flusssensor 5 wird vorzugsweise ein Halbleiterbaustein verwendet, der dem Fluid mit einer Heizung Wärme zuführt und eine von der Verteilung oder Abführung dieser Wärme abhängige Grösse misst. Die entsprechende Grösse ist vom Massenfluss (d.h. dem Produkt aus Dichte und Flussrate) im ausgemessenen Unterkanal abhängig. Ein geeigneter Sensor ist in z.B. DE 101 29 300 offenbart.

Vorzugsweise ist, wie in Fig. 2 dargestellt, der zweite Teil 2b des Nebenkanals 2, in Flussrichtung gesehen, dem ersten Teil 2a vorgelagert. Dies hat den Vorteil, dass die im ersten Teil 2a erzeugten Turbulenzen die Messung des Flusssensors 5 im zweiten Teil 2b nicht stören.

Im Folgenden wird anhand von Fig. 3 und 4 eine konkrete Ausführung der Vorrichtung beschrieben. Hier wird der Nebenkanal 2 von einem Gehäuse mit einem ersten und einem zweiten Gehäuseteil 10, 11 gebildet, von denen in Fig. 3 nur der erste Gehäuseteil 10 abgebildet ist. Der zweite Gehäuseteil 11 wird von einer Printplatte gebildet, die Löcher aufweist, in welche mehrere Befestigungszapfen 14 des ersten Gehäuseteils 10 eingeführt werden.

Im Gehäuseteil 10 sind zwei Öffnungen 12 und 13 ausgeformt, welche mit dem Hauptkanal 1 verbunden werden. Öffnung 12 bildet dabei den Eingang für das Fluid in den Nebenkanal 2 und Öffnung 13 den Austritt zurück in den Hauptkanal 1. Von der Öffnung 12 gelangt das Fluid in einen Kanalabschnitt 15 des zweiten Abschnitts 2b des Nebenkanals, der sich sodann in die zwei Unterkanäle 4a, 4b verzweigt. Um in diesem Bereich eine laminare Strömung zu erzeugen, verläuft der Kanalabschnitt 15 in gleicher Richtung wie die Nebenkanäle 4a, 4b und die Übergänge sind möglichst stufenlos. Die Unterkanäle 4a, 4b sind durch einen Steg 4c getrennt und seitlich durch Stege 4d und 4e begrenzt. Die Unterkanäle 4a, 4b münden in eine erste Kammer 16 des ersten Kanalabschnitts 2a, an welche die Blende 3 anschliesst, gefolgt von einer zweiten Kammer 17, von wo das Fluid durch die Öffnung 13 wieder in den Hauptkanal zurückgeführt wird.

Der Flusssensor 5 ist, wie in Fig. 3 gestrichelt dargestellt, am ersten Unterkanal 4a angeordnet, und zwar gegen dessen ausgangsseitiges Ende 18a hin. Mit anderen Worten ist der Abstand zwischen dem eingangsseitigen Ende 18b des Unterkanals 4 und dem Sensor 5 also wesentlich grösser als der Abstand zwischen dem ausgangsseitigen Ende 18a und dem Sensor 5. Damit wird erreicht, dass die Länge des Unterkanals 4a genutzt wird um den Fluss des Fluids in einen wirbellosen, laminaren Zustand zu bringen, bevor es auf den Sensor 5 trifft.

Wie aus Fig. 4 ersichtlich, ist der Flusssensor 5 in einer Vertiefung 19 des zweiten Gehäuseteils 11 angeordnet und ist über Verbindungsdrähte 20 mit Leiterbahnen verbunden, die auf dem zweiten Gehäuseteil 11 angeordnet sind. Ein Teil der Vertiefung 19 ist über dem ersten Unterkanal 4a angeordnet. Dieser Teil ist seitlich durch die Stege 4c und 4d begrenzt und trägt die Messorgane 21 des Sensors.

Wie ebenfalls aus Fig. 4 ersichtlich, besitzt der erste Unterkanal 4a eine kleinere Querschnittfläche als der zweite Unterkanal 4b. Dies erlaubt es, eine relativ grosse Menge von Fluid durch den Nebenkanal 2 zu führen und somit starke turbulente Effekte im Bereich der Blende 3 zu erreichen, ohne dass der Messbereich des Sensors überschritten wird.

Anstelle der Blende 3 kann im ersten Abschnitt 2a des Nebenkanals auch ein Kanalabschnitt vorgesehen sein, in welchem sich der Kanaldurchmesser in anderer Weise sprunghaft ändert, oder es kann dem Fluid z.B. eine sprunghafte Richtungsänderung aufgezwungen werden. Eine Blende, d.h. eine Stelle, wo der Querschnitt zuerst sprunghaft reduziert und sodann wieder sprunghaft erhöht wird, ist jedoch bevorzugt, da sie konstruktiv einfach ist und dennoch relativ starke Turbulenzen erzeugt.

Es ist ferner auch denkbar, dass in mehr als einem der Nebenkanäle ein Flusssensor angeordnet wird.

In einer anderen Ausführung kann Kanalabschnitt 15 entfallen und die Unterkanäle 4a, 4b können eingangsseitig direkt über eine gemeinsame Öffnung oder über getrennte Öffnungen mit dem Hauptkanal verbunden werden.

Mit der hier beschriebenen Vorrichtung kann die Flussgeschwindigkeit bzw. der Volumenfluss (z.B. in m/s, oder nach Integration über die Fläche der Kanäle, in $m^3/s$) oder auch der Massenfluss (z.B. in $kg/m^2/s$ bzw. nach Integration kg/s) des Fluids gemessen werden.

## Patentansprüche

1. Vorrichtung zur Messung des Flusses eines Fluids mit einem Hauptkanal (1) und mit einem zum Hauptkanal (1) parallel geschalteten Nebenkanal (2), in welchem ein Flusssensor (5) angeordnet ist, **dadurch gekennzeichnet, dass** der Nebenkanal (2) einen ersten Abschnitt (2a) und einen zweiten Abschnitt (2b) aufweist, wobei der erste Abschnitt (2a) einen Druckabfall $\Delta p1$ erzeugt, für den gilt

$$\Delta p1 = c1 \cdot vb + c2 \cdot vb^2 \text{ mit } c2 \neq 0,$$

wobei vb die Flussrate im ersten Abschnitt (2a) ist, und wobei der zweite Abschnitt (2b) zwei parallel geschaltete Unterkanäle (4a, 4b) aufweist, wobei die Unterkanäle (4a, 4b) in Serie zum ersten Abschnitt angeordnet sind.

2. Vorrichtung nach Anspruch 1, wobei der Flusssensor (5) im zweiten Abschnitt (2b) angeordnet ist, und insbesondere wobei der zweite Abschnitt (2b) in Flussrichtung dem ersten Abschnitt (2a) vorgelagert ist.

3. Vorrichtung nach einem der vorangehenden Ansprüche, wobei im ersten Abschnitt (2a) ein Kanalstück (16, 3, 17) angeordnet ist, dessen Durchmesser sich sprunghaft verändert.

4. Vorrichtung nach einem der vorangehenden Ansprüche, wobei im ersten Abschnitt (2a) mindestens eine Blende (3) angeordnet ist.

5. Vorrichtung nach einem der vorangehenden Ansprüche, wobei im zweiten Abschnitt (2b) ein erster und ein zweiter Unterkanal (4a, 4b) vorgesehen sind, wobei der Flusssensor (5) am ersten Unterkanal (4a) angeordnet ist.

6. Vorrichtung nach Anspruch 5, wobei der erste Unterkanal (4a) einen kleineren oder gleichen Querschnitt als der zweite Unterkanal (4b) aufweist.

7. Vorrichtung nach einem der Ansprüche 5 oder 6, wobei der Flusssensor (5) näher an einem ausgangsseitigen Ende (18a) des ersten Unterkanals (4a) als an einem eingangsseitigen Ende (18b) angeordnet ist.

8. Vorrichtung nach einem der vorangehenden Ansprüche, wobei ein Druckabfall über dem Hauptkanal (1) näherungsweise gegeben ist durch

$$\Delta p = \eta \cdot Kh1 \cdot vh + \rho \cdot Kh2 \cdot vh^2,$$

wobei $\eta$ und $\rho$ die Viskosität und die Dichte des Fluids bezeichnen und vh die Flussrate im Hauptkanal (1), und der Druckabfall über dem Nebenkanal (2) näherungsweise gegeben ist durch

$$\Delta p = \eta \cdot Kb1 \cdot vb + \rho \cdot Kb2 \cdot vb^2,$$

wobei vb die Flussrate im Nebenkanal (2) ist, Kh1, Kh2, Kb1, Kb2 die linearen und quadratischen Strömungswiderstände im Hauptkanal (1) und im Nebenkanal (2) beschreiben, und dass näherungsweise gilt

$$Kb1 = n \cdot Kh1 \text{ und } Kb2 = n^2 \cdot Kh2$$

mit einer Konstante n > 1.

**9.** Vorrichtung nach einem der vorangehenden Ansprüche, wobei der Nebenkanal (2) von einem Gehäuse (10, 11) gebildet wird, wobei in einem ersten Teil (10) des Gehäuses Öffnungen (12, 13) zur Verbindung mit dem Hauptkanal (1) und Vertiefungen zur Bildung des Nebenkanals (2) angeordnet sind, und wobei der zweite Teil (11) auf den Vertiefungen des ersten Teils angeordnet ist.

**10.** Vorrichtung nach einem der vorangehenden Ansprüche, wobei der erste und der zweite Abschnitt (2a, 2b) in Serie angeordnet sind.

**11.** Nebenkanal für eine Vorrichtung nach einem der vorangehenden Ansprüche, in welchem ein Flusssensor (5) angeordnet ist, **dadurch gekennzeichnet, dass** der Nebenkanal einen ersten Abschnitt (2a) und einen zweiten Abschnitt (2b) aufweist, wobei der erste Abschnitt (2a) einen Druckabfall $\Delta p1$ erzeugt, für den näherungsweise gilt

$$\Delta p1 = c1 \cdot vb + c2 \cdot vb^2 \text{ mit } c2 \neq 0,$$

wobei vb die Flussrate im ersten Abschnitt (2a) ist, und wobei der zweite Abschnitt (2b) zwei parallel geschaltete Unterkanäle (4a, 4b) aufweist, wobei die Unterkanäle (4a, 4b) in Serie zum ersten Abschnitt (2a) angeordnet sind.

**Fig. 1**

**Fig. 2**

Fig. 3

Fig. 4